Europäisches Patentamt

European Patent Office

Office européen des brevets

(11) Publication number: **0 052 454**
**B1**

## (12) EUROPEAN PATENT SPECIFICATION

(45) Date of publication of patent specification: **25.09.85**

(21) Application number: **81305144.8**

(22) Date of filing: **29.10.81**

(51) Int. Cl.⁴: **G 11 B 3/60,** G 11 B 17/022, G 11 B 7/24

(54) Recording and/or reproducing equipment including a recording member.

(30) Priority: **17.11.80 JP 161679/80**

(43) Date of publication of application:
**26.05.82 Bulletin 82/21**

(45) Publication of the grant of the patent:
**25.09.85 Bulletin 85/39**

(84) Designated Contracting States:
**DE FR GB IT NL**

(56) References cited:
**EP-A-0 026 475
EP-A-0 030 754
DE-A-2 608 724
DE-A-2 727 189
US-A-4 165 519**

(73) Proprietor: **Kabushiki Kaisha Toshiba
72, Horikawa-cho Saiwai-ku
Kawasaki-shi Kanagawa-ken 210 (JP)**

(72) Inventor: **Tago, Yoshiaki c/o Patent Division
Tokyo Shibaura Denki K. K. 72 Horikawa-cho
Saiwai-ku Kawasaki-shi Kanagawa-ken 210 (JP)**

(74) Representative: **Batchellor, John Robert et al
BATCHELLOR, KIRK & EYLES 2 Pear Tree Court
Farringdon Road
London EC1R 0DS (GB)**

Courier Press, Leamington Spa, England.

## Description

This invention relates to a recording and/or reproducing equipment using a recording member for storing and filing information. In particular, the invention is directed to an apparatus for rotatably supporting such a recording member.

Recording and/or reproducing equipment to which the invention relates has a turntable for receiving and supporting the recording member. A light beam is utilised to record and reproduce information (e.g. video) on the recording member. Recently, there has been a demand for increasing the information storage capacity of the recording member. To meet this demand, disc units having the capability of recording information on, and reproducing information from, both sides of the recording member have been developed. As shown in United States Patent No. 4,074,282, for example, a disc unit having two spaced and centrally apertured recording portions are utilised. Each recording portion is provided with a recording layer on its inner surface. The disc unit is loaded onto a turntable which supports and rotates the disc unit. The turntable includes a perpendicularly orientated centering member which protrudes through the apertures of both recording portions. The construction of the disc unit and its position on the turntable permits recording and reproducing information on the recording layer on each side of the recording member.

It is essential when utilising this kind of disc unit for recording and reproduction that it is correctly and precisely positioned on the turntable. The recording surface of the recording member must be substantially parallel to the surface of the turntable. This is very important during reproduction of the information since the light beam which detects the information must correctly and precisely contact the areas of the recording member where the desired information is located. Any tilting of the recording member with respect to the turntable will cause defective reproduction and recording. Therefore, the aperture in each recording portion must coincide with precision with the centering member on the turntable. Consequently, it is necessary to precisely align the apertures in the two recording portions in order that the surface of the disc unit is positioned substantially parallel to the surface of the turntable.

In practice, however, due to errors which arise during production of the disc unit, it is not possible to align the apertures precisely. As a result, it is impossible, in many cases, to load the disc unit onto the turntable due to mismatching of these apertures. Further, tilting of the recording member will occur with respect to the turntable due to this misalignment. Such misalignment will prevent accurate reproduction and recording.

It is an object of the invention to provide apparatus for supporting a recording member which avoids the disadvantages mentioned above and to enable the recording member to be correctly and precisely positioned on a turntable.

Accordingly the invention provides recording and/or reproducing equipment, which includes a recording member having first and second axially spaced recording portions each having central apertures which are approximately aligned axially; and a turntable for supporting and rotating the record member and including a centering member for centering the record member with respect to the turntable; characterised in that the centering member has an axial length such that it enters the aperture of which ever one of the recording portions lies more adjacent the turntable but does not protrude into the aperture of the other recording portion.

The centering member is designed to engage the aperture of only one recording portion. Therefore, the recording member can be correctly loaded onto the turntable despite any misalignment between the apertures in the recording portions. Therefore, any assembly errors in the manufacture of the recording member will not prevent the centering member from precisely engaging the aperture of the recording portion located on the turntable. As a result, the recording portion which receives the light beam is properly centred so that recording and reproduction accurately occurs. On turning the recording member over in order to utilise the other recording portion, the record member is properly oriented for that other portion.

The invention will be more readily understood by way of example from the following description of embodiments thereof, reference being made to the accompanying drawing, in which

Figure 1 is a diagram showing recording and reproducing equipment;

Figure 2 is a vertical sectional view of the turntable and disc unit shown in Figure 1;

Figure 3 is an exploded perspective view of the turntable and disc unit of Figure 2;

Figure 4 is an exploded perspective view of the disc unit shown in Figure 3;

Figures 5a and 5b are respectively a plan view and a perspective view of a second form of turntable; and

Figures 6a and 6b are similar views of a third form of turntable.

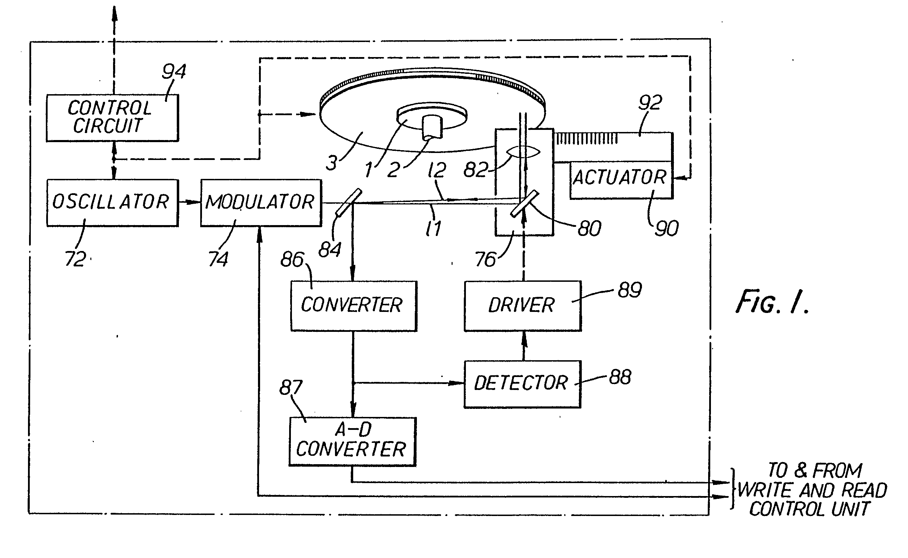

Figure 1 is a diagram of an optical memory system which reads and writes information using an optical recording member 3. Recording member 3 is rotated at a constant speed by a disc shaped turntable 1 which is rotated by a driving unit (not shown) via drive shaft 2. A laser oscillator 72 produces a laser beam which is modulated by a modulator 74. Modulator 74 is connected to a write and read control unit (not shown); this unit modulates the laser beam according to the signal output (e.g. video information and index information) from the control unit. An optical head 76 receives the modulated laser beam and projects it onto recording member 3 which rotates at a constant speed. Optical head 76 includes a galvanometer 80 which includes a pivotable mirror and a lens system 82 for focusing the beam onto the recording member 3. This mirror pivots to an extent sufficient to deflect the beam along the entire radius of recording member 3.

Recording member 3 includes a recording layer which is formed, for example, by depositing a reflective layer of e.g. Te or Al on the upper surface of a plastic substrate forming an information recording area. When an incident light beam $1_1$ contacts a portion of the Te layer, that portion is vaporised according to the modulation of the light beam. As a result, a series of reflecting and transparent regions (i.e. information bits) are formed on the recording member according to the modulation. In this way, video or other information is recorded along a spiral record track on recording member 3.

When reading the information from the recording member, laser beam $1_2$, produced by oscillator 72, scans the recording member which again rotates at a constant speed. This light is reflected from member 3 and is transmitted through optical head 76 and is directed to a reflector 84. Reflector 84 reflects the light onto a photoelectric converter 86, which converts the incident light to electrical analog signals. The signals from converter 86 are supplied to an analog-to-digital converter 87 which converts the analog signals into digital signals suitable for controlling the write and read control unit. A detector 88 is also connected to photoelectric converter 86 and produces a control signal corresponding to the deviation of laser beam $1_2$ from the centre of the information bits stored on the spiral record track. Optimum reproduction performance requires that the reading beam contact the centre of each information bit. Consequently, a galvanometer driver 89 is connected to detector 88 for controlling galvanometer 80 according to the control signal from detector 88. In this manner, the light beam is positioned to contact the centre of each information bit.

A linear actuator 90 changes the radial position of optical head 76 along recording member 3 according to a control signal from a control circuit 94. Linear actuator 90 is provided with an optical scale 92 for detecting the radial position of optical head 76. Optical scale 92 supplies a position signal to control circuit 94 every time optical head 76 shifts to the next position. Control circuit 94 also supplies control signals to a main control unit (not shown), laser oscillator 72, and the drive unit (not shown) for turntable 1.

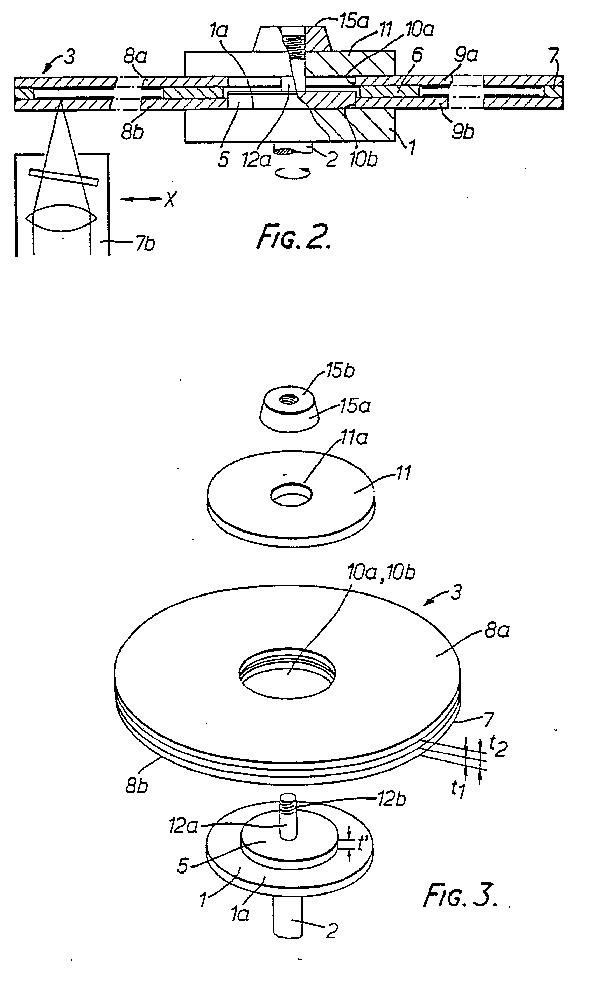

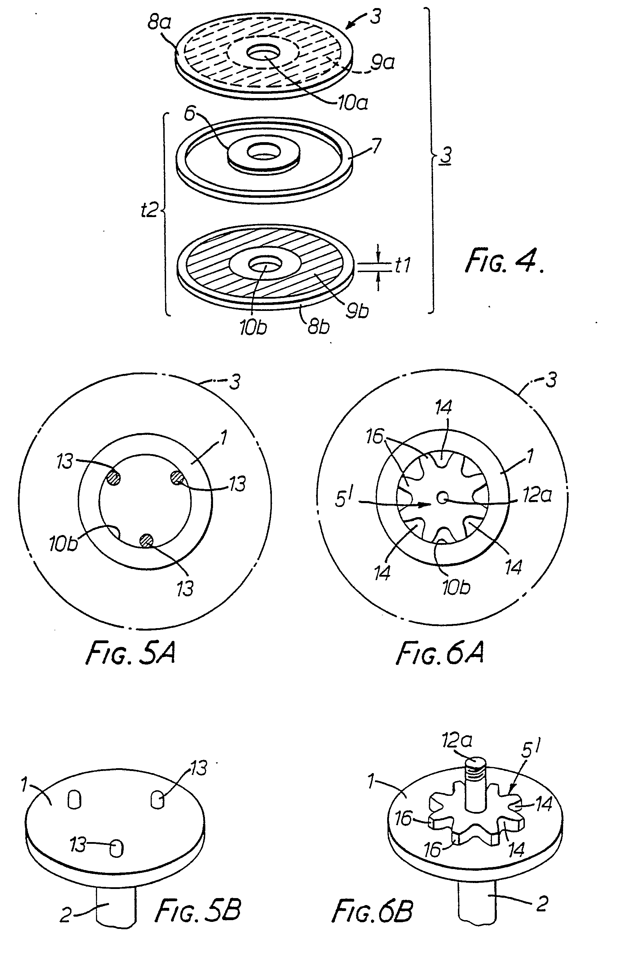

Recording member 3, as shown in Figure 4, has a disc like construction and two annular recording portions 8a and 8b which are spaced apart axially by concentric spacers 6, 7 connected to portions 8a, 8b by adhesive. Disc members 8a, 8b are made of an acryl material having approximately equal thickness. As shown in Figure 4, each disc member 8a, 8b has the same outside diameter as concentric outer spacer 7. The inner surface of disc members 8a, 8b contain respective recording layers 9a, 9b of light-reflecting material such as Al or Te. Centrally located in each recording portion 8a, 8b are respective apertures 10a, 10b having the same inside diameter (see Figure 2). Apertures 10a and 10b have approximately the same shape and size. Concentric inner space 6 (Figure 4) is centrally located between recording portions 8a, 8b and contains an aperture having a slightly larger diameter than apertures 10a, 10b (see Figure 2).

As shown in Figures 2 and 3, turntable 1 has an upper horizontal surface 1a and includes a central, coaxial centering member 5 extending upwardly from surface 1a. In the form shown in Figures 2 and 3, the centering member is disc-like with a diameter such that it closely fits into the aperture 10 of lower recording portions 8b. Centering member 5, which, like the turntable itself, is preferably made of brass, centering the recording member 3 with respect to the turntable.

As shown in Figures 2—3, centering member 5 has an axial length t' such that it enters aperture 10b in the lower recording portion but does not protrude into aperture 10a in the upper recording portion. The axial length of each recording portion 8a, 8b is $t_1$, and the total axial length of either recording portion plus the spacers 6, 7 is $t_2$. The axial length of centering member 5 is designed so that $t' \leq t_2$. Usually, centering member 5 is designed so that $t' > t_1$. In the example shown in the drawings, $t_1 = 1.5$ mm, $t_2 = 3.5$ mm and $t' = 2$ mm. Therefore, centering member 5 engages only the lower of the two recording portions 8a, 8b. As a result, the recording portion, located adjacent the optical head 76 and upon which the recording and reproducing will occur, is accurately positioned and centered so that no eccentricity will occur during its rotation to produce inaccurate recording and reproduction. This is the case even if the positions of apertures 10a, 10b are axially misaligned.

The turntable carries a spindle 12a which has a threaded terminal portion 12b and which extends upwardly and coaxially from the centering member 5. Threaded spindle 12a is utilised to mount disc unit 3 securely on turntable 1. After the recording portion 8b has been positioned to engage centering member 5, a circular rubber washer 11 with an aperture 11a is positioned on the protruding portion of spindle 12a. The outer diameter of washer 11 is larger than the diameter of apertures 10a and 10b, while the diameter of aperture 11a is smaller than the diameter of apertures 10a and 10b. In order to secure recording member 3 on turntable 1, a clamping nut 15a is utilised to press the member against turntable 1. Nut 15a is threaded at 15b and is secured onto threads 12b of spindle 12a. Clamping nut 15a has an outer diameter which is larger than the diameter of aperture 11a of washer 11.

It should be clear that after recording or reproducing on the tracks of recording portion 8b as required, the recording member 3 can be turned over so that recording or reproducing may occur on recording portion 8a. The centering member 5 then centres recording portion 8a with respect to the turntable 1 and, as before, any axial misalignment between apertures 10a and 10b is of no consequence, and does not produce eccentricity in the rotation of recording portion 8a, so that accuracy of reproduction and recording is unaffected.

The shape of the centering member is not limited to that shown in Figures 2—3. Alternatively, as shown in Figures 5a and 5b, the centering member can be constituted by a plurality of pins 13, which in use enter the aperture 10 of the lower recording portion 8 and engage with the inner edge of that recording portion. In the forms shown in Figures 6a and 6b, the centering member 5' is recessed at 14 to form a number of radially extending finger-like projections 16 which engage the inner edge of the lower recording portion 8.

## Claims

1. Recording and/or reproducing equipment, which includes a recording member (3) having first and second axially spaced recording portions (8a and 8b) each having central apertures (10a, 10b) which are approximately aligned axially; and a turntable (1) for supporting and rotating the record member (3) and including a centering member (5, 5', 13) for centering the record member (3) with respect to the turntable; characterised in that the centering member (5, 5', 13) has an axial length (t') such that it enters the aperture (10a or 10b) of which ever one of the recording portions (8a or 8b) lies more adjacent the turntable but does not protrude into the aperture (10a or 10b) of the other recording portion (8b or 8a).

2. Recording and/or reproducing equipment as claimed in claim 1, wherein the turntable (1) has a vertical rotation axis, with which the axis of the apertures (10a or 10b) of the selected one of the recording portions is aligned by the centering member (5, 5', 13).

3. Recording and/or reproducing equipment as claimed in claim 1 or claim 2, wherein the recording portions (8a and 8b) are spaced apart by two concentric spacers (6 and 7) having equal axial length.

4. Recording and/or reproducing equipment as claimed in claim 3, wherein the combined axial length ($t_2$) of either one of the recording portions (8a or 8b) and the spacers (6 and 7) is greater than the axial length (t') of the centering member (5, 5', 13).

5. Recording and/or reproducing equipment as claimed in any one of the preceding claims 1 to 4, wherein the turntable (1) further includes a centrally located spindle (12a, 12b) which has an axial length such that it projects through the apertures (10a and 10b) of both recording portions (8a and 8b) and which serves to secure the recording member (3) to the turntable (1) for rotation therewith.

6. Recording and/or reproducing equipment as claimed in claims 1 to 5, wherein the centering member is a disc (5) which is a close fit in the aperture (10a or 10b) of either recording portion (8a or 8b).

7. Recording and/or reproducing equipment as claimed in claims 1 to 5, wherein the centering member is constituted by a plurality of pins (13) adapted to engage in the aperture (10a or 10b) of either recording portion (8a or 8b).

8. Recording and/or reproducing equipment as claimed in claims 1 to 5, wherein the centering member (5') has a plurality of radially extending finger-like projections (16) to engage in the aperture (10a or 10b) of either recording portion (8a or 8b).

9. Recording and/or reproducing equipment as claimed in any one of claims 1 to 8, further including recording and reproducing means (76) for supplying recording information signals to a recording layer (9a, 9b) on a recording portion (8a, 8b) and for reading information signals from that recording layer (9a, 9b).

10. Recording and/or reproducing equipment as claimed in claim 9, wherein the recording and reproducing means is an optical head (76) positioned adjacent the recording member (3) when positioned on the turntable (1).

## Patentansprüche

1. Aufzeichnungs- und/oder Wiedergabegerät, das einen Aufzeichnungsteil (3) mit ersten und zweiten axial beabstandeten Aufzeichnungsabschnitten (8a und 8b) aufweist, die jeweils zentrale Öffnungen (10a, 10b) aufweisen, die etwa axial miteinander ausgerichtet sind, und einen Drehtisch (1) zur Aufnahme und zum Drehen des Aufzeichnungsteiles (3), der ein Zentrierorgan (5, 5', 13) zum Zentrieren des Aufzeichnungsteiles (3) in bezug auf den Drehtisch aufweist, dadurch gekennzeichnet, daß das Zentrierorgan (5, 5', 13) eine derartige axiale Länge (t') aufweist, daß es in die Öffnung (10a oder 10b) desjenigen Aufzeichnungsabschnittes (8a oder 8b) eintritt, der näher zum Drehtisch liegt, jedoch nicht in die Öffnung (10a oder 10b) des anderen Aufzeichnungsabschnittes (8b oder 8a) hineinragt.

2. Aufzeichnungs- und/oder Wiedergabegerät nach Anspruch 1, dadurch gekennzeichnet, daß der Drehtisch (1) eine senkrechte Drehachse aufweist, mit der die Achse der Öffnungen (10a oder 10b) des ausgewählten Aufzeichnungsabschnittes der Aufzeichnungsabschnitte durch das Zentrierorgan (5, 5', 13) ausgerichtet ist.

3. Aufzeichnungs- und/oder Wiedergabegerät nach Anspruch 1 oder 2, dadurch gekennzeichnet, daß die Aufzeichnungsabschnitte (8a und 8b) mit Hilfe zweier konzentrischer Abstandselemente (6 und 7) die die gleiche axiale Länge aufweisen, beabstandet zueinander angeordnet sind.

4. Aufzeichnungs- und/oder Wiedergabegerät nach Anspruch 3, dadurch gekennzeichnet, daß die kombinierte axiale Länge ($t_2$) einer der Aufzeichnungsabschnitte (8a oder 8b) und der Abstandselemente (6 und 7) größer ist als die axiale Länge (t') des Zentrierorganes (5, 5', 13).

5. Aufzeichnungs- und/oder Wiedergabegerät nach einem der vorhergehenden Ansprüche 1 bis 4, dadurch gekennzeichnet, daß der Drehtisch (1) ferner eine zentral angeordnete Spindel (12a, 12b) aufweist, die eine derartige axiale Länge aufweist, daß sie durch die Öffnungen (10a und 10b) beider Aufzeichnungsabschnitte (8a und 8b) hindurchragt, und die dazu dient, das Aufzeichnungsteil (3) am Drehtisch (1) zum Mitdrehen zu befestigen.

6. Aufzeichnungs- und/oder Wiedergabegerät nach den Ansprüchen 1 bis 5, dadurch gekennzeichnet, daß das Zentrierorgan eine Scheibe (5) ist, die mit enger Passung in der Öffnung (10a oder 10b) einer der Aufzeichnungsabschnitte (8a oder 8b) sitzt.

7. Aufzeichnungs- und/oder Wiedergabegerät nach den Ansprüchen 1 bis 5, dadurch gekennzeichnet, daß das Zentrierorgan durch mehrere zur Anlage an die Öffnung (10a oder 10b) einer der Aufzeichnungsabschnitte (8a oder 8b) vorgesehener Stifte (13) gebildet wird.

8. Aufzeichnungs- und/oder Wiedergabegerät nach den Ansprüchen 1 bis 5, dadurch gekennzeichnet, daß das Zentrierorgan (5') mehrere radial verlaufende fingerähnliche Vorsprünge (16) aufweist zur Anlage an der Öffnung (10a oder 10b) einer der Aufzeichnungsabschnitte (8a oder 8b).

9. Aufzeichnungs- und/oder Wiedergabegerät nach einem der Ansprüche 1 bis 8, ferner gekennzeichnet durch Aufzeichnungs- und Widergabemittel (76) zur Zufuhr von Aufzeichnungsinformationssignalen zu einer Aufzeichnungsschicht (9a, 9b) eines Aufzeichnungsabschnittes (8a, 8b) und zum Lesen von Informationssignalen aus der Aufzeichnungsschicht (9a, 9b).

10. Aufzeichnungs- und/oder Wiedergabegerät nach Anspruch 9, dadurch gekennzeichnet, daß das Aufzeichnungs- und Wiedergabemittel ein optischer Kopf (76) ist, der nahe dem Aufzeichnungsteil (3) bei Anordnung auf dem Drehtisch (1) angeordnet ist.

**Revendications**

1. Appareil d'enregistrement et/ou de reproduction qui comprend un élément d'enregistrement (3) ayant des première et seconde parties d'enregistrement (8a et 8b) espacées axialement, ayant chacune des ouvertures centrales (10a, 10b) qui sont approximativement alignées axialement; et un plateau tournant (1) destiné à supporter et à faire tourner l'élément d'enregistrement (3), et comprenant un élément de centrage (5, 5', 13) destiné à centrer l'élément d'enregistrement (3) par rapport au plateau tournant; caractérisé en ce que l'élément de centrage (5, 5', 13) a une longueur axiale (t') telle qu'il pénètre dans l'ouverture (10a ou 10b) de celle des parties d'enregistrement (8a ou 8b) qui est la plus proche du plateau tournant, mais il ne pénètre pas dans l'ouverture (10a ou 10b) de l'autre partie d'enregistrement (8b ou 8a).

2. Appareil d'enregistrement et/ou de reproduction selon la revendication 1, dans lequel le plateau tournant (1) a un axe de rotation vertical et l'élément de centrage (5, 5', 13) aligne avec cet axe l'axe des ouvertures (10a ou 10b) de celle des parties d'enregistrement qui est sélectionnée.

3. Appareil d'enregistrement et/ou de reproduction selon la revendication 1 ou la revendication 2, dans lequel les parties d'enregistrement (8a et 8b) sont mutuellement espacées par deux entretoises concentriques (6 et 7) ayant la même longueur axiale.

4. Appareil d'enregistrement et/ou de reproduction selon la revendication 3, dans lequel la longueur axiale combinée ($t_2$) de l'une ou l'autre des parties d'enregistrement (8a ou 8b) et des entretoises (6 et 7) est supérieure à la longueur axiale (t') de l'élément de centrage (5, 5', 13).

5. Appareil d'enregistrement et/ou de reproduction selon l'une quelconque des revendications 1 à 4 précédentes, dans lequel le plateau tournant (1) comprend en outre une broche (12a, 12b) placée en position centrale, qui a une longueur axiale telle qu'elle traverse les ouvertures (10a et 10b) des deux parties d'enregistrement (8a et 8b) et qui est utilisée pour fixer l'élément d'enregistrement (3) sur le plateau tournant (1), pour qu'il tourne avec ce dernier.

6. Appareil d'enregistrement et/ou de reproduction selon les revendications 1 à 5, dans lequel l'élément de centrage est un disque (5) qui pénètre sans jeu dans l'ouverture (10a ou 10b) de l'une ou l'autre des parties d'enregistrement (8a ou 8b).

7. Appareil d'enregistrement et/ou de reproduction selon les revendication 1 à 5, dans lequel l'élément de centrage est constitué par un certain nombre de tétons (13) conçus de façon à pénétrer dans l'ouverture (10a ou 10b) de l'une ou l'autre des parties d'enregistrement (8a ou 8b).

8. Appareil d'enregistrement et/ou de reproduction selon les revendications 1 à 5, dans lequel l'élément de centrage (5') comporte un certain nombre de saillies en forme de doigts (16) qui s'étendent radialement de façon à pénétrer dans l'ouverture (10a ou 10b) de l'une ou l'autre des parties d'enregistrement (8a ou 8b).

9. Appareil d'enregistrement et/ou de reproduction selon l'une quelconque des revendications 1 à 8, comprenant en outre des moyens d'enregistrement et de reproduction (76) destinés à appliquer des signaux d'information à enregistrer à une couche d'enregistrement (9a, 9b) sur une partie d'enregistrement (8a, 8b), et à lire des signaux d'information dans cette couche d'enregistrement (9a, 9b).

10. Appareil d'enregistrement et/ou de reproduction selon la revendication 9, dans lequel les moyens d'enregistrement et de reproduction consistent en une tête optique (76) qui est placée en position adjacente à l'élément d'enregistrement (3) lorsqu'il est positionné sur le plateau tournant (1).

FIG. I.

94 CONTROL CIRCUIT

72 OSCILLATOR

74 MODULATOR

86 CONVERTER

87 A-D CONVERTER

89 DRIVER

88 DETECTOR

92 ACTUATOR

90

80

82

76

84

3  1  2  12  11

TO & FROM WRITE AND READ CONTROL UNIT

0 052 454

FIG. 2.

FIG. 3.

Fig. 4.

FIG. 5A

FIG. 6A

FIG. 5B

FIG. 6B